# EUROPEAN PATENT APPLICATION

(11) **EP 3 292 755 A1**
(43) Date of publication of application: **14.03.2018**
(21) Application number: 17189722.6
(22) Date of filing: 06.09.2017
(51) Int. Cl.: A01M 23/16, A01M 23/08

(54) **RODENT TRAP**

(30) Priority: 07.09.2016 DK 201670688
(71) Applicant: OEHTECH APS, 6933 Kibæk (DK)
(72) Inventor: HANSEN, Oliver Evald, 6933 Kibæk (DK); HINDKJÆR, Michael, 6933 Kibæk (DK)
(74) Representative: Carlsen, Bjarne

(57) **Abstract**

A rodent trap (1) is disclosed, comprising an outer housing part (2), an inner housing part (3) telescopically inserted into the outer housing part, and one or more biased spring loads arranged to apply a contracting force between the outer housing part and the inner housing part or at least a part thereof, wherein a trigger string (7) is arranged so that, as long as the trigger string is intact, it prevents the inner housing part or at least a part thereof from being inserted longer into the outer housing part than to a certain predefined position, in which an entrance opening (4) in the inner housing part is still outside the outer housing part, whereas, when the trigger string is broken, the inner housing part or at least a part thereof is forced further into the outer housing part, until the inner housing part and the outer housing part together form an airtight chamber.

## Description

The present invention relates to a rodent trap, and more particularly to a rodent trap, in which the trapped rodent is killed by asphyxiation within an airtight chamber, in or from which the rodent carcass can easily and sanitarily be disposed of.

### Background of the invention

A known deficiency of most conventional rodent traps is the danger of transmittal of infectious pathogens from a trapped rodent to humans when the trap is emptied and the carcass of a trapped rodent (or the living rodent, if the trap is of a type, in which the rodent is not killed) is to be disposed of.

US 2005/0284014 A1 discloses a rodent trap, which produces a hermetic seal to trap a rodent and every associated contaminant within a small sealed container, in which the rodent suffers a humane death by asphyxiation. This enables for a safe and sanitary disposal and thus, solves the above-described problem.

One disadvantage of this solution, however, is that it requires a rather specialised bait in the form of a "break-away bait stick" for luring the rodent into the trap, this bait stick forming part of the triggering mechanism of the trap. Furthermore, the set-up of this trap is relatively complicated and significant care is to be taken, not to break the bait stick when setting up the trap.

### Brief description of the invention

It is an object of the present invention to provide a rodent trap without the disadvantages of the prior art within the field as described above.

The present invention relates to a rodent trap comprising an outer housing part having a closed end and an open end, an inner housing part having a closed end, a partly closed end and an entrance opening near its closed end, which inner housing part is telescopically inserted into the outer housing part with the partly closed end of the inner housing part pointing towards the closed end of the outer housing part, and one or more biased spring loads, for instance in the form of coil springs, rubber bands or resilient members, which are arranged to apply a contracting force between the outer housing part and the inner housing part or at least a part thereof, wherein the rodent trap further comprises a trigger string, which is arranged so that, as long as the trigger string is intact, it prevents the inner housing part or at least a part thereof from being inserted longer into the outer housing part than to a certain predefined position, in which the entrance opening in the inner housing part is still outside the outer housing part, whereas, when the trigger string is broken, the one or more spring loads forces the inner housing part or at least a part thereof further into the outer housing part, until the closed end of the inner housing part reaches the open end of the outer housing part in such a way that the inner housing part and the outer housing part together form an airtight chamber.

By using a trigger string, which can easily be replaced when the trap has to be "reloaded" after having shut, any bait can be used in the trap and the disadvantages of the solutions known in the art as described above have been eliminated.

In an embodiment of the invention, the cross-sectional shape of the inner housing part and the outer housing part is circular, oval or polygonal.

In principle, the inner housing part and the outer housing part can have any cross-sectional shape, as long as the inner housing part fits loosely into the outer housing part. For production purposes, however, the mentioned shapes will typically be advantageous.

In an embodiment of the invention, the trigger string is fastened, for instance in two oppositely positioned slits, on the outside of the outer housing part and is arranged to pass across an access opening through the partly closed end of the inner housing part, i.e. between the interior of the inner housing part and the interior of the outer housing part outside the inner housing part.

This is a reliable and relatively simple way of setting up the trap. If the bait is placed in the outer housing part near the closed end thereof and the access opening in the partly closed end of the inner housing part is dimensioned appropriately, depending on the type of rodent, which is to be caught with the trap, the rodent is forced to bite over the trigger string in order to pass through the access opening in its effort to reach the bait and the trap shuts.

In an embodiment of the invention, at least some parts of the inner housing part and/or the outer housing part are produced from an at least partly transparent material, such as for instance acrylic glass or another plastic material.

If the two housing parts or at least some parts thereof are made from an at least partly transparent material, it is possible to see what is inside the trap and no surprises occur when the trap is emptied. If on the other hand, one chooses to simply dispose of the complete trap including its contents without even opening the trap, the transparency of the material may, of course, be considered of less importance.

In an embodiment of the invention, the trigger string is made from a synthetic material, such as for instance nylon.

Nylon and similar synthetic materials are advantageous in that strong trigger strings can be produced, which do not break due to the spring load pressing the inner housing part into the outer housing part but which, at the same time, can easily be bitten over by any rodent. Furthermore, such materials are cost-efficient and the trigger string may, for instance, consist of a common fishing line.

In an embodiment of the invention, the inner housing part further comprises a gasket arranged, for instance against a flange, at the closed end thereof for securing an airtight closure between the inner housing part and the outer housing when the former is fully inserted into the latter.

The use of a gasket is a reliable and simple way of ensuring that the chamber formed by the two housing parts when the trap has shut is actually airtight, which is important in order to be sure that any rodent caught within the trap is killed by asphyxiation and do not starve to death.

### The drawings

In the following, an exemplary embodiment of the invention is described in further detail with reference to the figures, of which
- Fig. 1: illustrates schematically a rodent trap according to a first embodiment of the invention in a first expanded configuration,
- Fig. 2: illustrates schematically the same rodent trap in a second collapsed configuration, and
- Fig. 3: is a side view of a rodent trap according to a second embodiment of the invention in a first expanded configuration,
- Fig. 4: is a side view of an inner housing part of the rodent trap according to this second embodiment of the invention in the same first expanded form,
- Fig. 5: is a side view of the rodent trap in Fig. 3 in a second collapsed configuration,
- Fig. 6: is a side view of the inner housing part in Fig. 4 in the same second collapsed form, and
- Fig. 7: is a perspective view of the inner housing part in Fig. 4.

### Detailed description of the invention

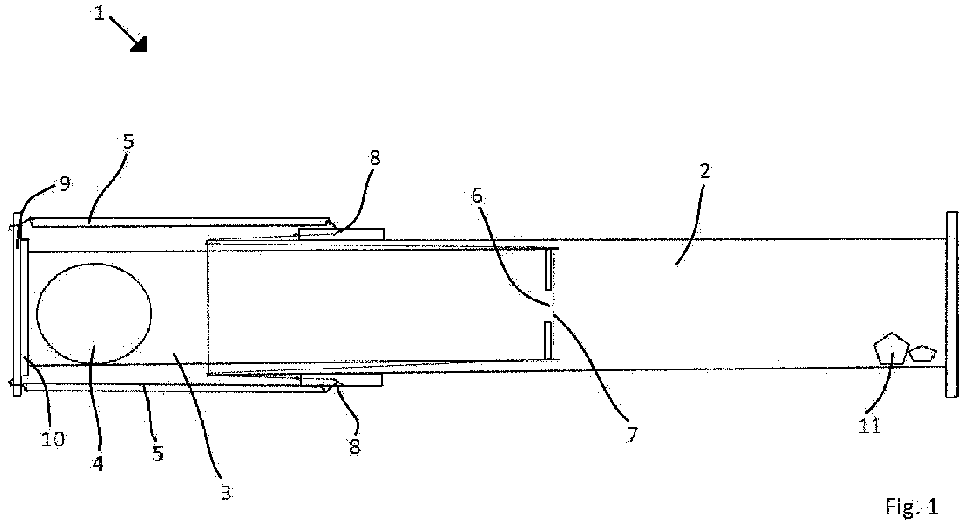

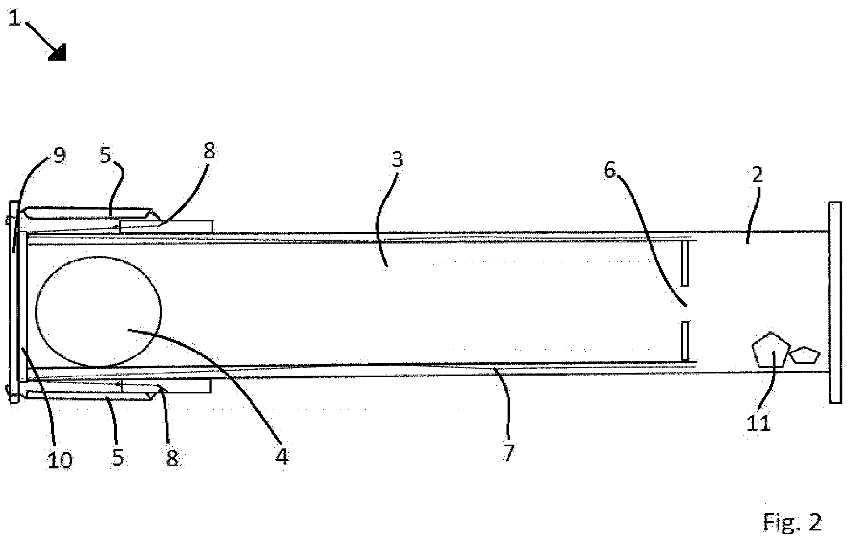

Figs. 1 and 2 illustrate schematically a rodent trap 1 according to a first embodiment of the invention in a first expanded configuration and in a second collapsed configuration, respectively.

In Fig. 1, the inner housing part 3 is partly inserted into the outer housing part 2. Two coil springs 5 are arranged to apply a contracting force between the inner housing part 3 and the outer housing part 2 trying to push the inner housing part 3 further into the outer housing part 2. This is prevented, however, by the trigger string 7, which is fastened at one end in a fastening slit 8 on the outside of the outer housing part 2, passes into the opening of the outer housing part 2, along the outside of the inner housing part 3 inserted therein, across the partly closed end of the inner housing part 3 and back through the opening of the outer housing part 2 to another fastening slit 8 arranged opposite the first one.

The rodent trap 1 is set up by performing the following simple procedure:
- place the bait 11 inside the outer housing part 2 near the closed end thereof
- fasten the two ends of the trigger string 7 to the two fastening slits 8 on the outside of the outer housing part 2, respectively
- lead the trigger string 7 through two oppositely positioned guide slits (not shown) at the edge of the inner housing part 3 near the partly closed end thereof, which guide slits ensure that the trigger string 7 passes across the centre of the access opening 6
- put the inner housing part 3 into the outer housing part 2
- fasten the two coil springs 5 between the inner housing part 3 and the outer housing part 2

In the configuration of the rodent trap 1 illustrated in Fig. 1, the entrance opening 4 into the inner housing part 3 is outside the outer housing part 2. This means that a rodent lured by the bait 11, which is placed inside the outer housing part 2 near the closed end thereof, can enter the inner housing part 3 through the entrance opening 4 in order to get to the bait 11. When the rodent reaches the access opening 6 in the partly closed end of the inner housing part 3, however, it faces a problem. The trigger string 7 passes across the access opening 6, which is dimensioned so that the rodent cannot pass through it as long as the trigger string 7 is there.

This causes the rodent to bite over the trigger string 7 in order to get through the access opening 6 in order to get to the bait 11 in the interior part of the outer housing part 2, which is outside the inner housing part 3. When the trigger string 7 is broken, however, nothing prevents the coil springs 5 from forcing the inner housing part 3 with the rodent further into the outer housing part 2, and the collapsed configuration of the rodent trap 1 as illustrated in Fig. 2 is obtained.

In this configuration, a gasket 10 arranged at along a flange 9 at the closed end of the inner housing part 3 is pressed against the open end of the outer housing part 2 so that an airtight chamber is formed by the outer housing part 2, the flange 9 on the inner housing part 3 and the gasket 10 there between.

The rodent is now trapped in the airtight chamber and will die by asphyxiation within a short time, after which it can easily be disposed of by simply removing the coil springs 5, taking the two housing parts 2, 3 apart and emptying out the rodent carcass at a suitable place. When emptied, the rodent trap 1 can easily be set up again as described above.

The rodents, which will most typically be caught using a rodent trap 1 like the one of the present invention, are mice and rats but, in principle, any animal, which is not able to pass the trigger string 7 but able to bite it over as described above, can be caught by means of a rodent trap 1 like the one described.

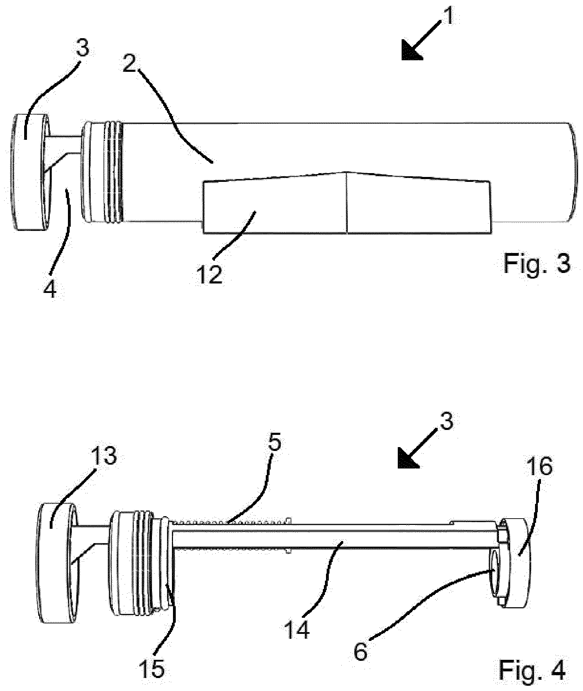

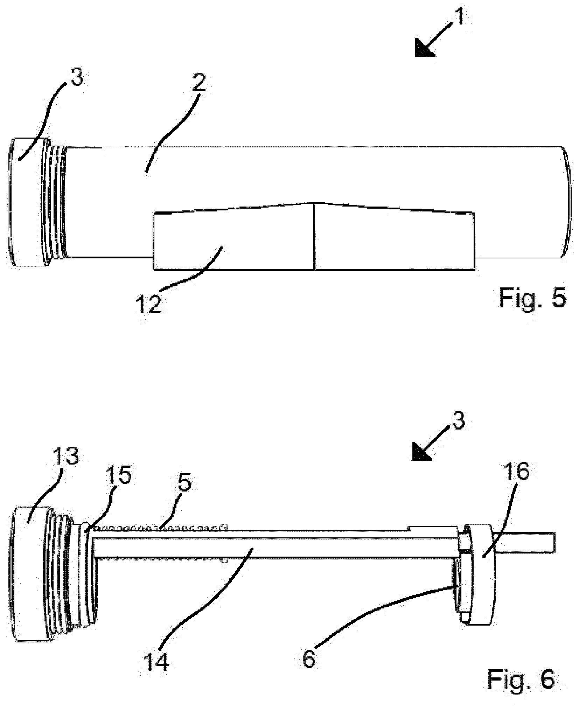

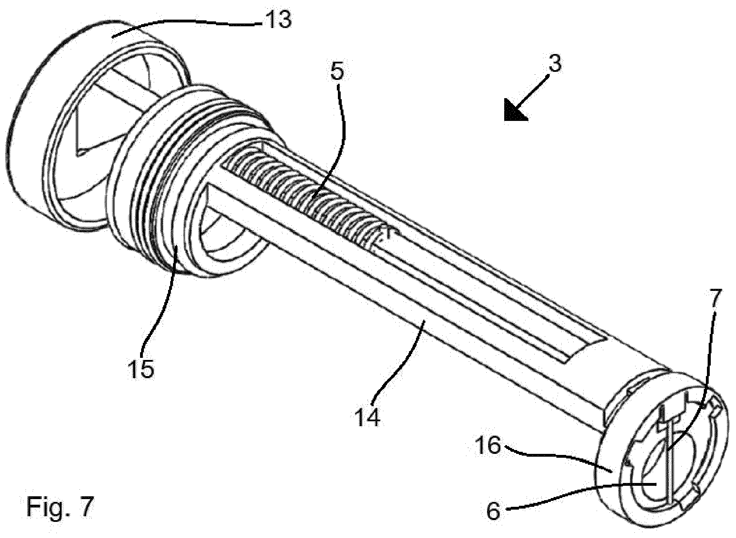

Figs. 3-7 illustrate schematically a rodent trap 1 according to a second embodiment of the invention in a first expanded configuration and in a second collapsed configuration.

In this embodiment, the outer housing part 2 is provided with a support 12 preventing the rodent trap 1, the cross-section of which is basically circular, from rolling away from the location, where it is set up.

The inner housing part 3 comprises a movable part 13, which includes the closed end of the inner housing part 3, and a fixed part 14, which is fastened to the outer housing part 2, for instance by means of a mounting thread 15. Furthermore, the partly closed end of the inner housing part 3 is formed by a detachable holder 16 for the trigger string 7, through which holder 16 the access opening 6 to the outer housing part 2 passes.

The coil spring 5 applies a contracting force between the movable part 13 and the fixed part 14 of the inner housing part 3 and, thereby, between the movable part 13 and the outer housing part 2, to which the fixed part 14 is fastened.

In the first expanded configuration of the rodent trap 1 according to this second embodiment of the invention, the movable part 13 is positioned so that the closed end of the inner housing part 3 is positioned at a certain distance from the open end of the outer housing part 2, leaving an entrance opening 4 there between.

In the second collapsed configuration, on the other hand, the movable part 13 of the inner housing part 3 has been moved further into the outer housing part 2, until the closed end of the inner housing part 3 has reached the open end of the outer housing part 2 in such a way that the inner housing part 3 and the outer housing part 2 together form an airtight chamber.

The function of the rodent trap 1 including the luring of the rodent into the rodent trap 1 and the trigger mechanism releasing the contraction of the rodent trap 1 is the same for this second embodiment of the invention as described above for the first embodiment.

It should be noted that the figures and the above description concerns only two specific embodiments of the invention and that, in other embodiments of the invention, some of the features of the described embodiment may be omitted or designed and constructed otherwise, the scope of protection being defined solely by the claims listed here below.

### List of reference numbers

1. Rodent trap
2. Outer housing part
3. Inner housing part
4. Entrance opening
5. Coil spring
6. Access opening to outer housing part
7. Trigger string
8. Fastening slit for trigger string
9. Flange
10. Gasket
11. Bait
12. Support
13. Movable part of inner housing part
14. Fixed part of inner housing part
15. Mounting thread for fixed part
16. Holder for trigger string

## Claims

1. A rodent trap (1) comprising
an outer housing part (2) having a closed end and an open end,
an inner housing part (3) having a closed end, a partly closed end and an entrance opening (4) near its closed end, which inner housing part is telescopically inserted into the outer housing part with the partly closed end of the inner housing part pointing towards the closed end of the outer housing part, and
one or more biased spring loads, for instance in the form of coil springs (5), rubber bands or resilient members, which are arranged to apply a contracting force between the outer housing part and the inner housing part or at least a part (13) thereof,
wherein the rodent trap further comprises a trigger string (7), which is arranged so that, as long as the trigger string is intact, it prevents the inner housing part or at least a part thereof from being inserted longer into the outer housing part than to a certain predefined position, in which the entrance opening in the inner housing part is still outside the outer housing part, whereas, when the trigger string is broken, the one or more spring loads forces the inner housing part or at least a part thereof further into the outer housing part, until the closed end of the inner housing part reaches the open end of the outer housing part in such a way that the inner housing part and the outer housing part together form an airtight chamber.

2. The rodent trap according to claim 1, wherein the cross-sectional shape of the inner housing part and the outer housing part is circular, oval or polygonal.

3. The rodent trap according to claim 1 or 2, wherein the trigger string is fastened, for instance in two oppositely positioned slits (8), on the outside of the outer housing part and is arranged to pass across an access opening (6) through the partly closed end of the inner housing part, i.e. between the interior of the inner housing part and the interior of the outer housing part outside the inner housing part.

4. The rodent trap according to any of the preceding claims, wherein at least some parts of the inner housing part and/or the outer housing part are produced from an at least partly transparent material, such as for instance acrylic glass or another plastic material.

5. The rodent trap according to any of the preceding claims, wherein the trigger string is made from a synthetic material, such as for instance nylon.

6. The rodent trap according to any of the preceding claims, wherein the inner housing part further comprises a gasket (10) arranged, for instance against a flange (9), at the closed end thereof for securing an airtight closure between the inner housing part and the outer housing when the former is fully inserted into the latter.
